# EUROPEAN PATENT APPLICATION

(11) **EP 2 302 356 A2**
(43) Date of publication of application: **30.03.2011**
(21) Application number: 10180075.3
(22) Date of filing: 27.09.2010
(51) Int. Cl.: G01N 15/14

(54) **Particle analyser for analysing shape**

(30) Priority: 29.09.2009 JP 2009225626
(71) Applicant: SYSMEX CORPORATION, Kobe-shi, Hyogo 651-0073 (JP)
(72) Inventor: Izuka, Munehisa, Hyogo 651-0073 (JP)
(74) Representative: HOFFMANN EITLE

(57) **Abstract**

A particle analyzer is disclosed that comprises:
a flow cell through which a specimen passes, the specimen including a plurality of particles to be captured;
an imaging device for capturing an image of a particle in the specimen passing through the flow cell;
an image processor for obtaining a first characteristic value of a first parameter, a second characteristic value of a second parameter and a third characteristic value of a third parameter based on the particle image obtained by the imaging device; and
a controller for generating and outputting a screen on which the first, second and third characteristic values are displayed at a time,
wherein
the first, second and third parameters relate to particle diameter; or
the first, second and third parameters relate to particle shape.

## Description

### TECHNICAL FIELD

The present invention relates to a particle analyzer which obtains information relating to the dimension and shape of a particle by analyzing an image of the particle.

### BACKGROUND

There is a known conventional particle analyzer in which a particle suspension is poured into a sheath flow cell, and an image of a particle included in the particle suspension flowing in the sheath flow cell is captured and analyzed so that an analysis result is displayed (see U.S.Patent 5721433 and Japanese Laid-Open Patent Publication 10-318904). The particle analyzer recited in U.S.Patent 5721433 displays a two-dimensional scattergram based on two parameters representing particle characteristics (equivalent circle diameter and circularity). The analyzer recited in Japanese Laid-Open Patent Publication 10-318904 displays a three-dimensional scattergram based on three parameters representing particle characteristics (equivalent circle diameter, circularity, aspect ratio). The equivalent circle diameter is a parameter relating to particle diameter, and the circularity and the aspect ratio are parameters relating to particle shape.

To analyze particles, useful information may be obtained from comparing at least three parameters relating to particle diameter. Two particles determined as having a substantially equal size by comparing two parameters relating to particle diameter, for example, may turn out to be very different in their sizes and shapes when a third parameter relating to particle diameter is added to the two parameters. To more accurately perform the particle analysis, therefore, it is desirable to compare at least three parameters relating to particle diameter, and it is similarly desirable to compare at least three parameters relating to particle shape for the same purpose.

The particle analyzers recited in U.S.Patent 5721433 and Japanese Laid-Open Patent Publication 10-318904, however, could not compare three or more parameters relating to particle diameter or particle shape.

### SUMMARY

The scope of the present invention is defined solely by the appended claims, and is not affected to any degree by the statements within this summary.

A first particle analyzer embodying features of this invention comprises:
a flow cell through which a specimen passes, the specimen including a plurality of particles to be captured;
an imaging device for capturing an image of a particle in the specimen passing through the flow cell;
an image processor for obtaining a first characteristic value of a first parameter, a second characteristic value of a second parameter and a third characteristic value of a third parameter based on the particle image obtained by the imaging device; and
a controller for generating and outputting a screen on which the first, second and third characteristic values are displayed at a time,
wherein
the first, second and third parameters relate to particle diameter; or
the first, second and third parameters relate to particle shape.

The particle analyzer according to the present aspect displays the characteristic values of three parameters relating to particle diameter or the characteristic values of three parameters relating to particle shape on one display screen. The particle analyzer thus provides useful information of the imaged particle.

In the particle analyzer according to the present aspect, the comparison screen includes a radar chart. This technical feature helps the particle characteristics be intuitively grasped.

In the present aspect, it is desirable that the first parameter be equivalent circle diameter, the second parameter be long-axis diameter, and the third parameter be short-axis diameter. By thus defining the parameters, an outer shape of the particle, as well as its dimension, can be readily grasped.

In the particle analyzer according to the present aspect, the imaging device captures a plurality of particles to obtain a plurality of particle images, and the characteristic value obtaining device obtains the first to third characteristic values based on the obtained plurality of particle images. Accordingly, characteristics of a specimen can be statistically grasped based on the characteristic values obtained from the plurality of particle images.

The characteristic value obtaining device obtains characteristic values of the first to third parameters based on the obtained plurality of particle images, and obtains average values of the obtained characteristic values of the first to third parameters as the first to third characteristic values.

In the particle analyzer according to the present aspect, the imaging device captures a plurality of particles to obtain a plurality of particle images, and the characteristic value obtaining device obtains the first to third characteristic values based on each of the obtained plurality of particle images. Accordingly, the characteristic values of different particles can be subjected to comparison.

The output device outputs the comparison screen for the particle selected from a table of the plurality of particles. Accordingly, characteristics of any particles wanted by a user can be displayed and compared to each other.

In the particle analyzer according to the present aspect, the comparison screen displays the first to third characteristic values which are normalized. Accordingly, the characteristic values of the parameters can be compared in the form of relative values.

In the particle analyzer according to the present aspect, the comparison screen displays first to third characteristic values obtained in a first specimen and first to third characteristic values obtained in a second specimen at once. Accordingly, the characteristics of two specimens can be subjected to comparison at once.

In the particle analyzer according to the present aspect, the characteristic value obtaining device obtains a fourth characteristic value of a fourth parameter relating to particle shape based on the generated particle images as well as the first to third characteristic values of parameters relating to particle diameter, and the comparison screen displays the first to fourth characteristic values on one screen. Accordingly, the characteristic value of one parameter relating to particle shape as well as the characteristic values of three parameters relating to particle diameter can be subjected to comparison at once.

The characteristic value obtaining device obtains a fifth characteristic value of a fifth parameter relating to particle shape and a sixth characteristic value of a sixth parameter relating to particle shape based on the generated particle images, and the comparison screen displays the first to sixth characteristic values on one screen. Accordingly, the characteristic values of three parameters relating to particle shape as well as the characteristic values of three parameters relating to particle diameter can be subjected to comparison at once.

In the present aspect, it is desirable that the fourth parameter be circularity, the fifth parameter be aspect ratio, and the sixth parameter be degree of envelope. By thus defining the parameters, the particle shape can be more accurately grasped.

The particle analyzer according to the present aspect may further include a setting device for setting the first to third parameters. According to the device additionally provided, the comparison screen can be displayed depending on the parameter desirably subjected to comparison.

According to the particle analyzer of the present aspect, wherein the characteristic values of three parameters relating to particle shape are displayed on one screen, useful information of the captured particle can be obtained.

### BRIEF DESCRIPTION OF THE DRAWINGS

Fig. 1 is an illustration of a structure of a particle analyzer according to an embodiment of the present invention;
Fig. 2 is an illustration of a screen showing a record list displayed on a display unit of an information processing device according to the embodiment;
Fig. 3 is an illustration of a screen showing an analysis result displayed on the display unit of the information processing device according to the embodiment;
Fig. 4 is an illustration of a screen showing an analysis result displayed on the display unit of the information processing device according to the embodiment;
Fig. 5 is an illustration of a screen showing a display parameter setting view displayed on the display unit of the information processing device according to the embodiment;
Fig. 6A illustrates a table representing specimens and parameter values thereof according to the embodiment;
Fig. 6B illustrates a table representing specimens and parameter values thereof according to the embodiment;
Fig. 6C illustrates a table representing specimens and parameter values thereof according to the embodiment;
Fig. 7A is a radar chart according to the embodiment;
Fig. 7B is a radar chart according to the embodiment;
Fig. 8A is a radar chart according to the embodiment;
Fig. 8B is a radar chart according to the embodiment;
Fig. 9A is a radar chart according to the embodiment;
Fig. 9B is a radar chart according to the embodiment;
Fig. 9C is a radar chart according to the embodiment;
Fig. 10A is a radar chart according to the embodiment;
Fig. 10B is a radar chart according to the embodiment;
Fig. 10C is a radar chart according to the embodiment;
Fig. 11A is a radar chart according to the embodiment;
Fig. 11B is a radar chart according to the embodiment;
Fig. 11C is a radar chart according to the embodiment;
Fig. 11D is a radar chart according to the embodiment;
Fig. 12 is an illustration of a screen showing a particle image list displayed on the display unit of the information processing device according to the embodiment;
Fig. 13 is an illustration of a screen showing a display screen for individual particle displayed on the display unit of the information processing device according to the embodiment;
Fig. 14A illustrates a table representing particles and parameter values thereof according to the embodiment;
Fig. 14B illustrates a table representing particles and parameter values thereof according to the embodiment;
Fig. 15A is a radar chart according to the embodiment;
Fig. 15B is a radar chart according to the embodiment;
Fig. 15C is a radar chart according to the embodiment;
Fig. 16A is a radar chart according to the embodiment;
Fig. 16B is a radar chart according to the embodiment;

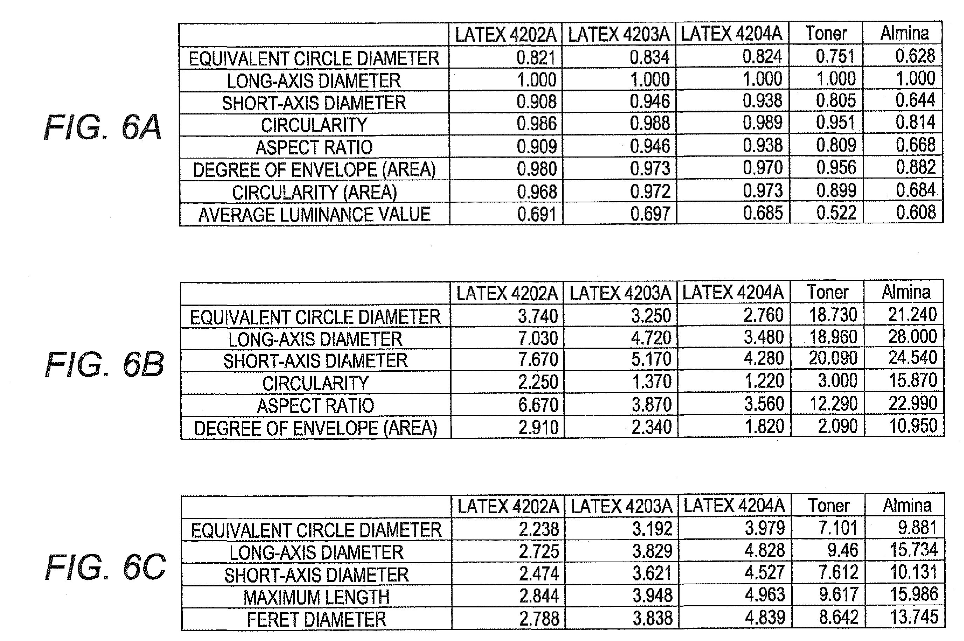

Fig. 6C is a radar chart according to the embodiment;

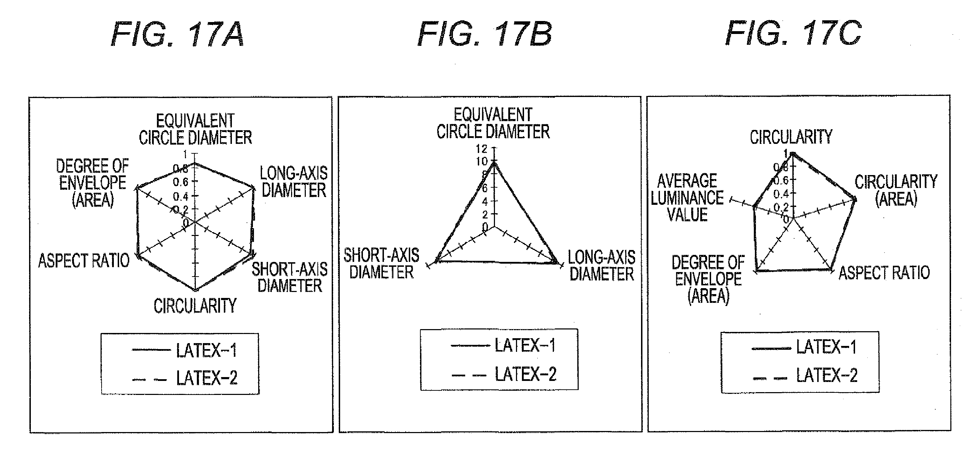

Fig. 17A is a radar chart according to the embodiment;
Fig. 17B is a radar chart according to the embodiment;
Fig. 17C is a radar chart according to the embodiment;

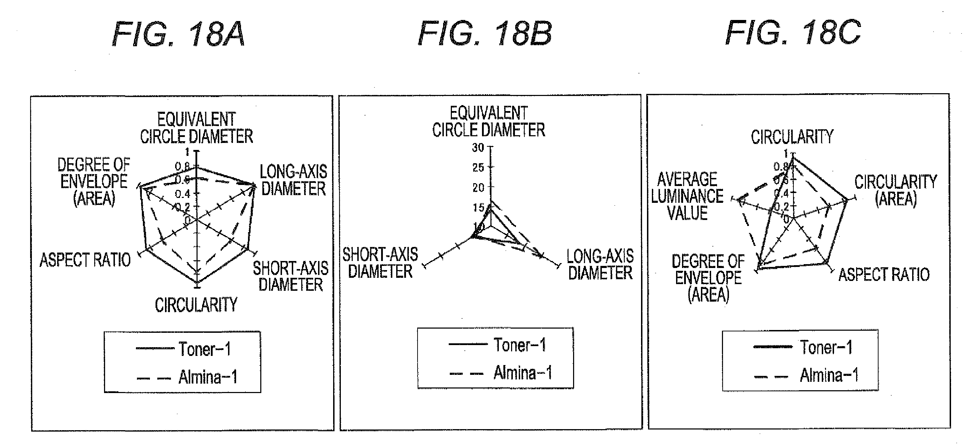

Fig. 18A is a radar chart according to the embodiment;
Fig. 18B is a radar chart according to the embodiment;
Fig. 18C is a radar chart according to the embodiment;

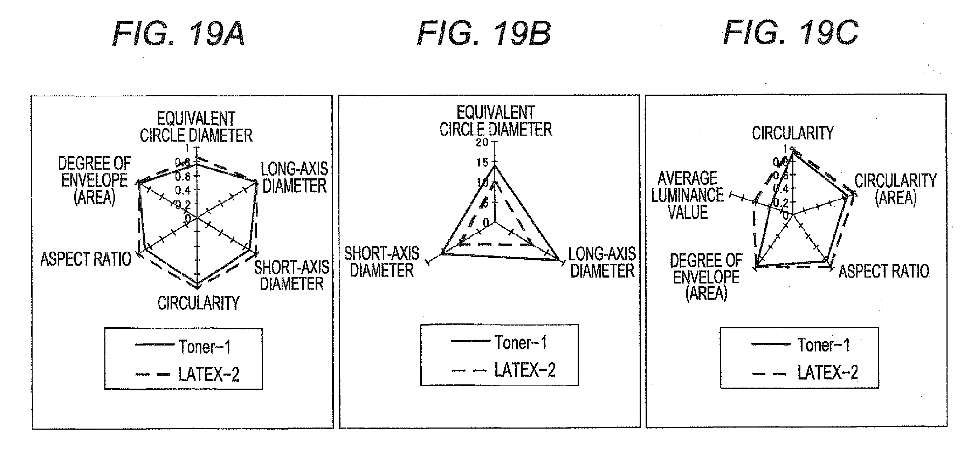

Fig. 19A is a radar chart according to the embodiment;
Fig. 19B is a radar chart according to the embodiment;
Fig. 19C is a radar chart according to the embodiment;

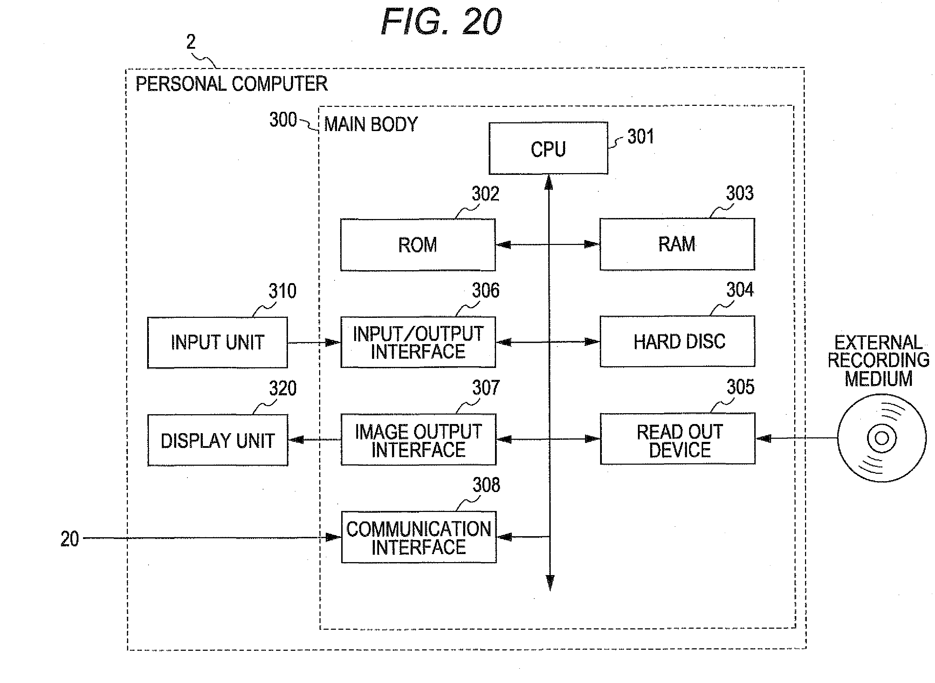

Fig. 20 is a block diagram illustrating a structure of the information processing device according to the embodiment;

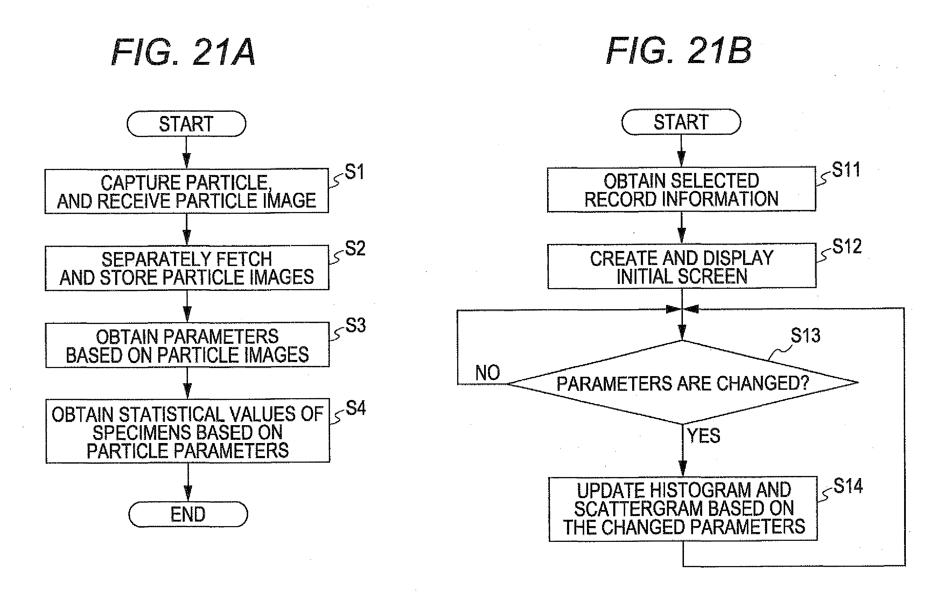

Fig. 21A is a flow chart illustrating steps of a particle imaging process according to the embodiment;
Fig. 21B is a flow chart illustrating steps of an analysis result 1 display process according to the embodiment;

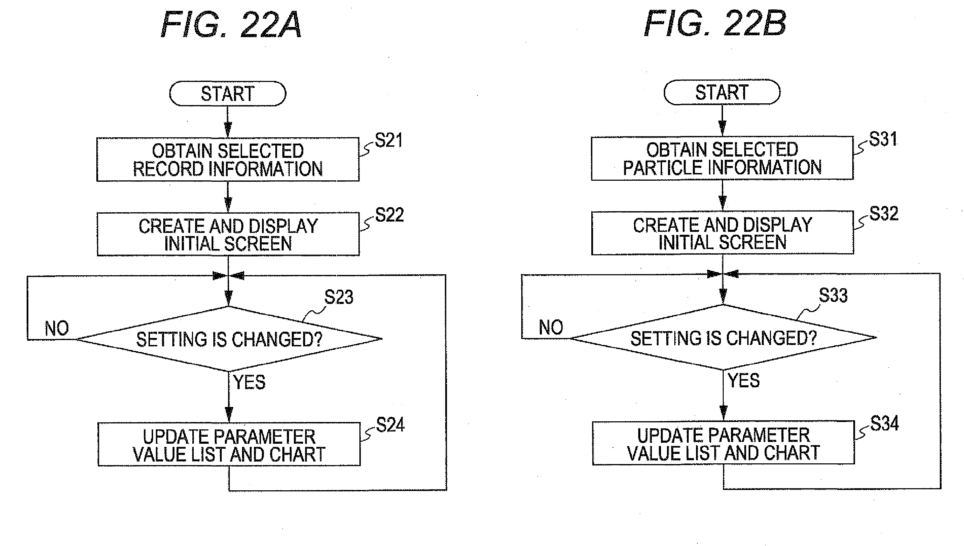

Fig. 22A is a flow chart illustrating steps of an analysis result 2 display process according to the embodiment;
Fig. 22B is a flow chart illustrating steps of a analysis and display process for individual particle according to the embodiment;

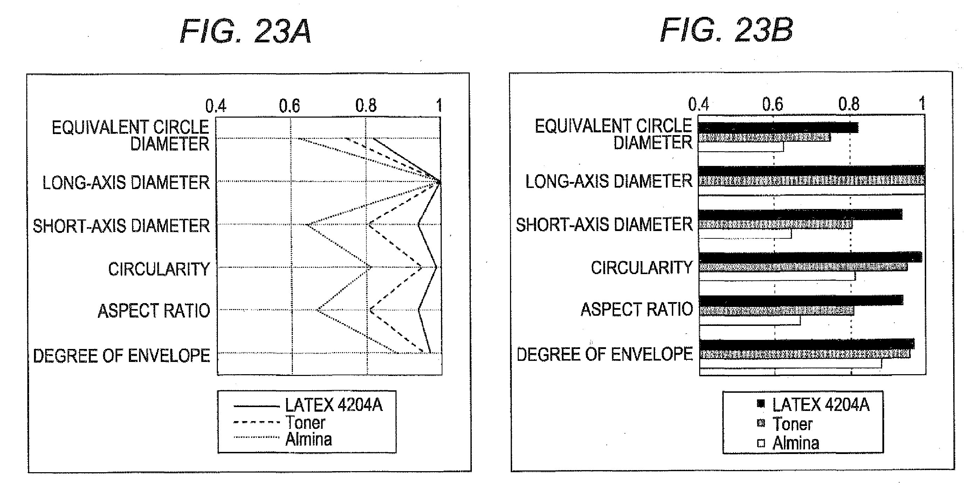

Fig. 23A illustrates a modified example of the radar chart according to the embodiment; and
Fig. 23B illustrates a modified example of the radar chart according to the embodiment.

### DETAILED DESCRIPTION OF THE PREFERRED EMBODIMENTS

The description of an embodiment given below will clearly articulate the effect and significance of the present invention. The embodiment described below, however, only suggests an example of embodying the present invention, and the present invention is not necessarily limited thereto.

Hereinafter, a particle analyzer according to an embodiment of the present invention is described referring to the accompanied drawings.

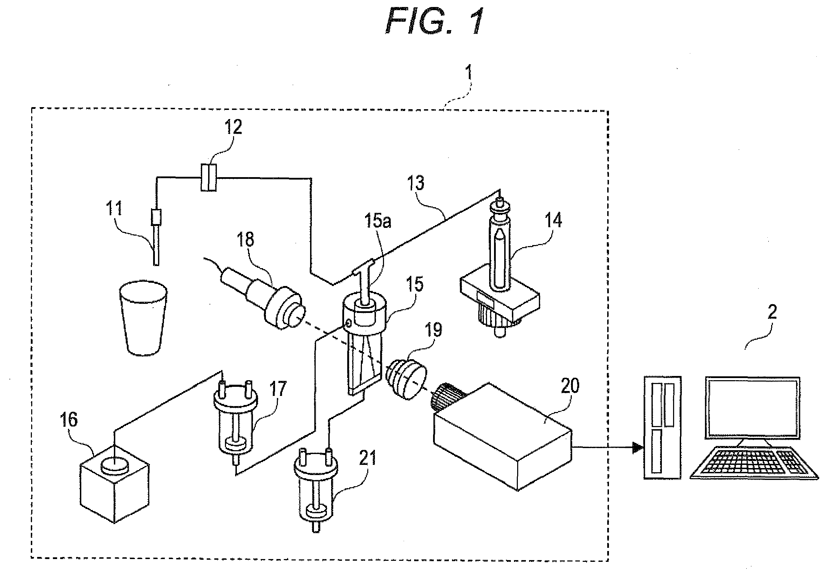

Fig. 1 is an illustration of a structure of a particle analyzer according to an embodiment of the present invention. The particle analyzer has a measurement device 1 and an information processing device 2. The measurement device 1 pours a specimen into a flow cell and captures an image of a particle in the specimen flowing in the flow cell. The information processing device 2 analyzes the captured particle image and displays an analysis result thereby obtained.

First, the specimen is sectioned through a suctioning pipette 11 by a suctioning device such as a diaphragm pump (not illustrated in the drawing) and passes through a sample filter 12 to be drawn into a specimen charging line 13 provided at an upper section of a flow cell 15. The sample filter 12 removes coarse particles and dust included in the specimen as the specimen passes therethrough, thereby eliminating the risk of blocking the flow cell 15 having a narrow flow path. Another effect exerted by the sample filter 12 is to crumble coarse agglomerates.

A sheath syringe 14 is turned on, so that the specimen sucked in the specimen charging line 13 is guided into the flow cell 15. The specimen guided into the flow cell 15 extruded through a lower end of a sample nozzle 15a. At the same time, a sheath liquid is poured into the flow cell 15 from a sheath liquid bottle 16 through a sheath liquid chamber 17. The specimen in the flow cell 15 is surrounded by the sheath liquid and then formed into a flat specimen flow.

The specimen flow thus flattened is irradiated with a pulsed light from a strobo light 18 at time intervals of 1/60 second, and a still image of a particle included in the specimen is captured every approximately 2µ second by a camera 20 via an object lens 19. An image signal outputted from the camera 20 is inputted to the information processing device 2.

The information processing device 2 obtains an image of each particle based on the inputted image signal in parallel with reception of the image signal. The information processing device 2 obtains parameter values representing particle characteristics based on each of the obtained particle images, and displays an analysis result of the specimen on a display unit. The structure of the information processing device 2 will be described later referring to Fig. 20.

A description is given below to the parameters representing the particle characteristics obtained by the information processing device 2 based on the particle image.

The parameters representing the particle characteristics obtained by the information processing device 2 are classified into parameters in which a particle diameter is quantitatively determined and parameters in which a particle shape is quantitatively determined. The parameters in which a particle diameter is quantitatively determined include:
equivalent circle diameter; maximum length; vertical length of maximum length; long-axis diameter; short-axis diameter; Feret diameter (horizontal); Feret diameter (vertical); perimeter equivalent circle diameter; particle perimeter; particle area;
envelope perimeter; envelope area; and area equivalent circle diameter. The parameters in which a particle shape is quantitatively determined includes: circularity; aspect ratio; aspect ratio of horizontally circumscribed rectangle;
average luminance value, luminance dispersion value; degree of envelope (perimeter); degree of envelope (area); and
circularity (area). The parameters are described in detail below.

**[Table 1]**

| <Particle diameter> | |
|---|---|
| Equivalent circle diameter (area equivalent circle diameter): | Diameter of circle having circumference equal to particle perimeter (diameter of circle having area equal to particle area) |
| Maximum length | Maximum length between two points on contour of particle image |
| Vertical length of maximum length | When particle is sandwiched between two straight lines in parallel with straight line which connects two points representing maximum length, shortest length which vertically connects the two straight lines |
| Long-axis diameter | Length of long axis when particle is sandwiched between two pairs of parallel lines |
| Short-axis diameter | Length of short axis when particle is sandwiched between two pairs of parallel lines |
| Feret diameter (horizontal) | Horizontal tangent diameter defined by distance between two pairs of parallel lines sandwiching particle |
| Feret diameter (vertical) | Vertical tangent diameter defined by distance between two pairs of parallel lines sandwiching particle |
| Perimeter equivalent circle diameter | Diameter of circle equal to particle perimeter |
| Particle perimeter | Peripheral length of particle |
| Particle area | Area of particle |
| Envelope perimeter | Perimeter of shape connecting protruding portions of particle |
| Envelope area | Area of shape connecting protruding portions of particle |

**[Table 2]**

| <Particle shape> | |
|---|---|
| Circularity | Ratio between particle perimeter and perimeter of circle corresponding to projected area of particle image |
| Aspect ratio | Ratio between long-axis diameter and short-axis diameter |
| Aspect ratio of horizontally circumscribed rectangle | When particle is surrounded by horizontally circumscribed rectangle, aspect ratio of the rectangle |
| Average luminance value | Average of pixel luminance values in particle region |
| Luminance dispersion value | Standard deviation of pixel luminance values in particle region |
| Degree of envelope (perimeter) | Ratio between envelope perimeter and particle perimeter |
| Degree of envelope (area) | Ratio between particle area and envelope area |
| Circularity (area) | ratio between projected area of particle image and area of circle equal to particle perimeter |

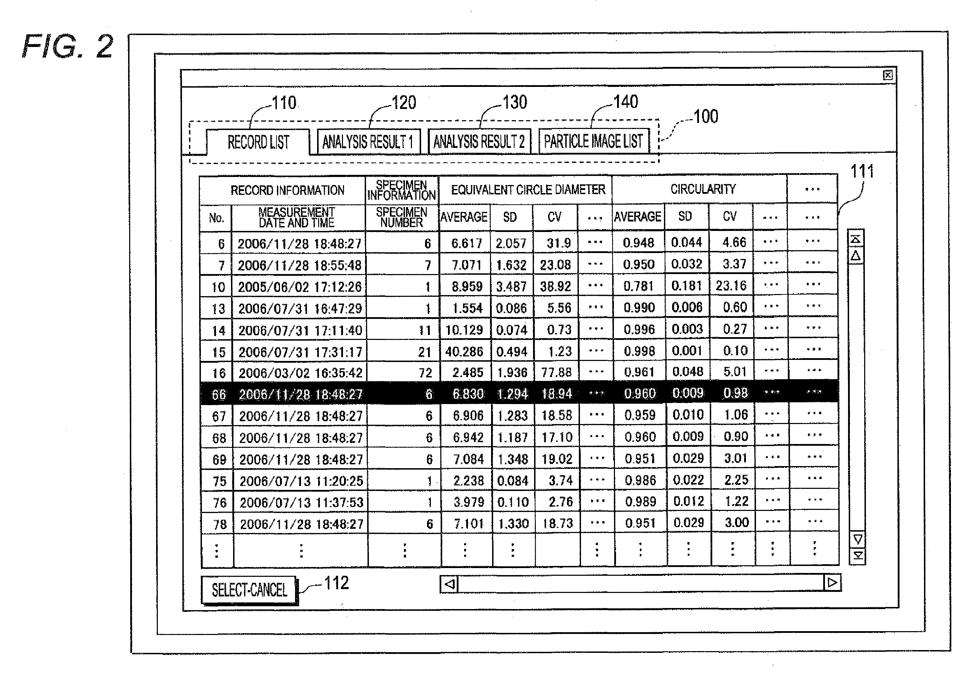

Fig. 2 is an illustration of a screen showing a record list displayed on the display unit of the information processing device 2. The illustrated screen is displayed when a record list tab 110 is pressed.

As illustrated in the drawing, the display unit includes a menu 100, a record list 111, and a select-cancel button 112. The menu 100 includes a record list tab 110, analysis result tabs 120 and 130, and a particle image list tab 140. When these tabs are pressed, screens corresponding to the pressed tabs are displayed.

The record list 111 displays thereon records of specimens measured by the measurement device 1. The record is a measurement result obtained by a measuring operation carried out under given measurement conditions. For example, when a user commands to end the measuring operation already started and the measuring operation is ended, the measurement result obtained during the measuring operation is created as one record. In the event that the analyzer is set to end the measuring operation as soon as the number of measured particles after the measurement started reaches a given number, the measurement result obtained during the measuring operation is created as one record.

As illustrated in the drawing, record items include: record number; measurement date and time; specimen number; statistical values (for example, average, SD, CV) of the parameters (equivalent circle diameter, circularity). The record number is a specific number used to identify each record. The measurement date and time is a date and time when the measurement relevant to the record ended. The specimen number is a number used to identify each specimen. The specimen number is associated with the specimen name.

The statistical values (for example, average, SD, CV) are obtained through statistics of parameter values of whole particles in one record. For example, average in the section of equivalent circle diameter in a record shows an average value of equivalent circle diameter values of all of particles measured to obtain the record. SD shows a standard deviation of the parameter values, and CV shows a coefficient of variation (degree of variability) calculated from the average and SD.

When a cell in the record list 111 is pressed, a record including the cell is highlighted to be selectable. When the select-cancel button 112 is pressed, selection of any record on the table is cancelled. On the record list 111, a plurality of records can be selected.

At the right and left ends of the record list 111, scroll bars respectively used to shift its display region side to side and up and down are provided. All of the records can be viewed when the up-down scroll bar is scrolled, and all of the record items can be viewed when the side-to-side scroll bar is scrolled.

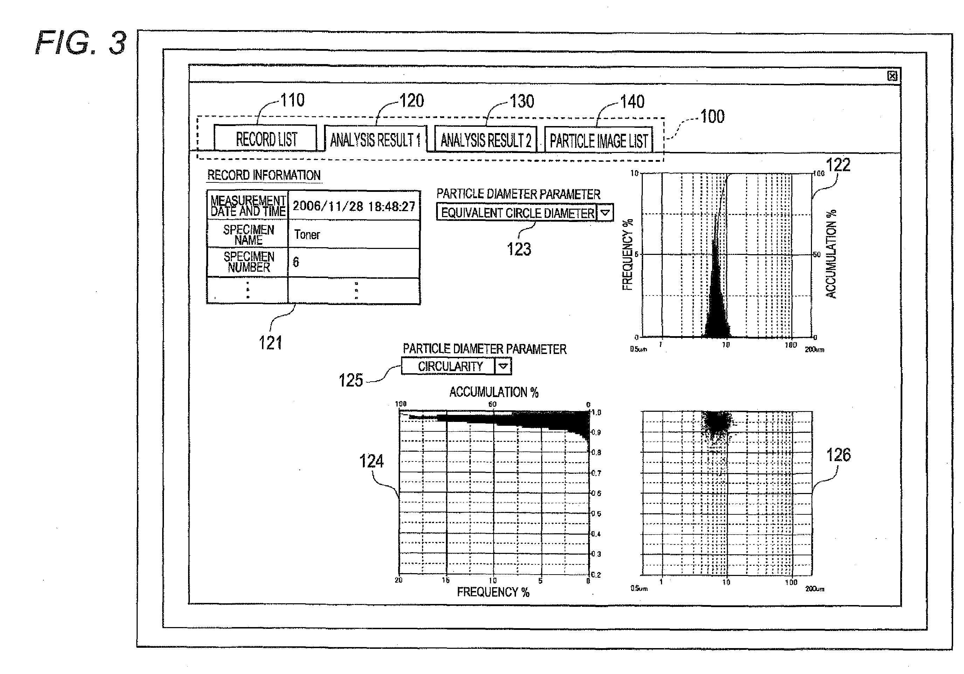

Fig. 3 is an illustration of a screen showing an analysis result 1 displayed on the display unit of the information processing device 2. The illustrated screen is displayed when the analysis result tab 120 is pressed in a state where one record is selected on the record list 111 of Fig. 2.

As illustrated in the drawing, the display unit includes, in addition to a menu 100 similar to that of Fig. 2, a record information list 121, a particle diameter histogram 122, a particle diameter parameter selection box 123, a particle shape histogram 124, a particle shape parameter selection box 125, and a scattergram 126.

The record information list 121 displays information associated with one record selected on the record list 111 illustrated in Fig. 2.

The particle diameter histogram 122 displays, in the form of histogram, distribution of the particle diameter parameters of different particles measured in the record displayed on the record information list 121. The particle diameter parameter displayed on the particle diameter histogram 122 is selected from a list of selectable particle diameter parameters when the particle diameter parameter selection box 123 is pressed. A lateral axis of the particle diameter histogram 122 is set in a range corresponding to the particle diameter parameter currently displayed, and right and left sides of a longitudinal axis respectively represent accumulation and frequency.

The particle shape histogram 124 displays, in the form of histogram, distribution of the particle shape parameters of different particles measured to in the record displayed on the record information list 121. The particle shape parameter displayed on the particle shape histogram 124 is selected from a list of selectable particle shape parameters when the particle shape parameter selection box 125 is pressed. A longitudinal axis of the particle shape histogram 123 is set in a range corresponding to the particle shape parameter currently displayed, and upper and lower sides of a lateral axis respectively represent accumulation and frequency.

When the particle diameter histogram 122 and the particle shape histogram 124 are displayed, a user can know values of the particle diameter parameters and particle shape parameters in different particles measured in the record displayed on the record information list 121.

The scattergram 126 is a graph two-dimensionally or three-dimensionally expressing the combined contents of the particle diameter histogram 122 and the particle shape histogram 124. A lateral axis and a longitudinal axis of the scattergram 126 are set in the same manner as the lateral axis of the particle diameter histogram 122 and the longitudinal axis of the particle shape histogram 124.

When the scattergram 126 is displayed, a user can know distribution of values of the particle diameter parameters and particle shape parameters in different particles measured in the record displayed on the record information list 121.

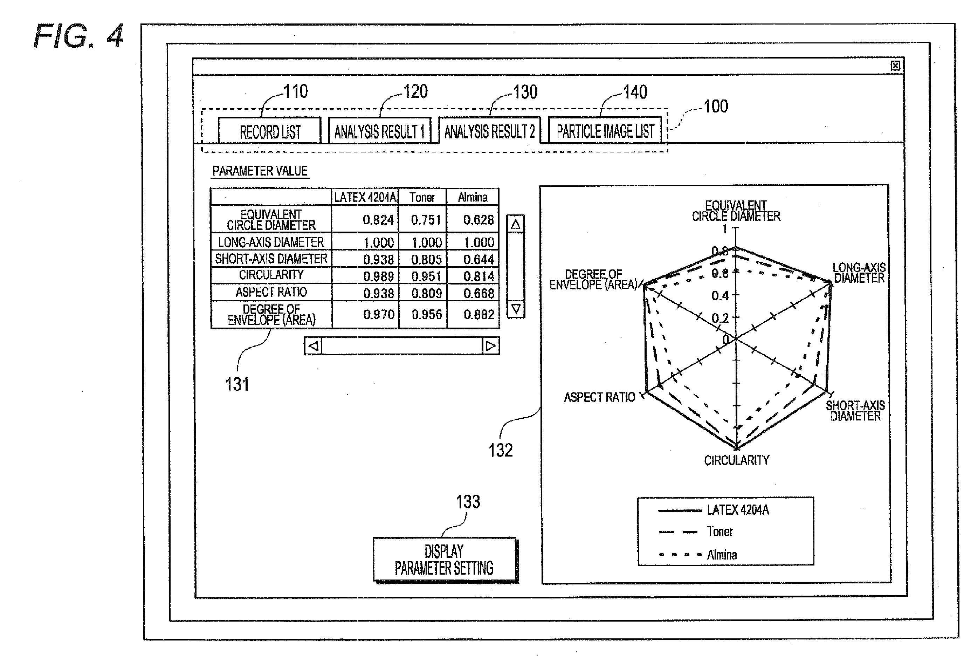

Fig. 4 is an illustration of a screen showing an analysis result 2 displayed on the display unit of the information processing device 2. The illustrated screen is displayed when the analysis result tab 130 is pressed in a state where at least one record is selected on the record list 111 illustrated in Fig. 2.

As illustrated in the drawing, the display unit includes, in addition to a menu 100 similar to that of Fig. 2, a parameter value list 131, a chart 132, and a display parameter setting button 133.

The parameter value list 131 displays statistical values of the parameters associated with the specimen in at least one record selected on the record list 111 illustrated in Fig. 2. Items laterally shown display names of specimens corresponding to the records selected on the record list 111, and items longitudinally shown displays the parameters. The parameters are defaulted in six items illustrated in the same drawing (equivalent circle diameter, long-axis diameter, short-axis diameter, circularity, aspect ratio, degree of envelope (area). As described later, the parameters can be changed by pressing the display parameter setting button 133 and then displaying a display parameter setting screen. At the right and left ends of the parameter value list 131, scroll bars respectively used to shift its display region side to side and up and down are provided. In the case where contents to be displayed cannot be displayed within the display region of the parameter value list 131, these scroll bars can be used to display the specimen names and parameters in all of the records.

The chart 132 displays a radar chart based on the parameter values displayed on the parameter value list 131. Fig. 4 illustrates a radar chart showing on one screen three specimens displayed on the parameter value list 131, and statistical values of three parameters relating to particle diameter and statistical values of three parameters relating to particle shape based on statistical values of six parameters of these specimens. When the chart 132 is thus displayed, a plurality of parameters of a plurality of specimens can be compared at a time.

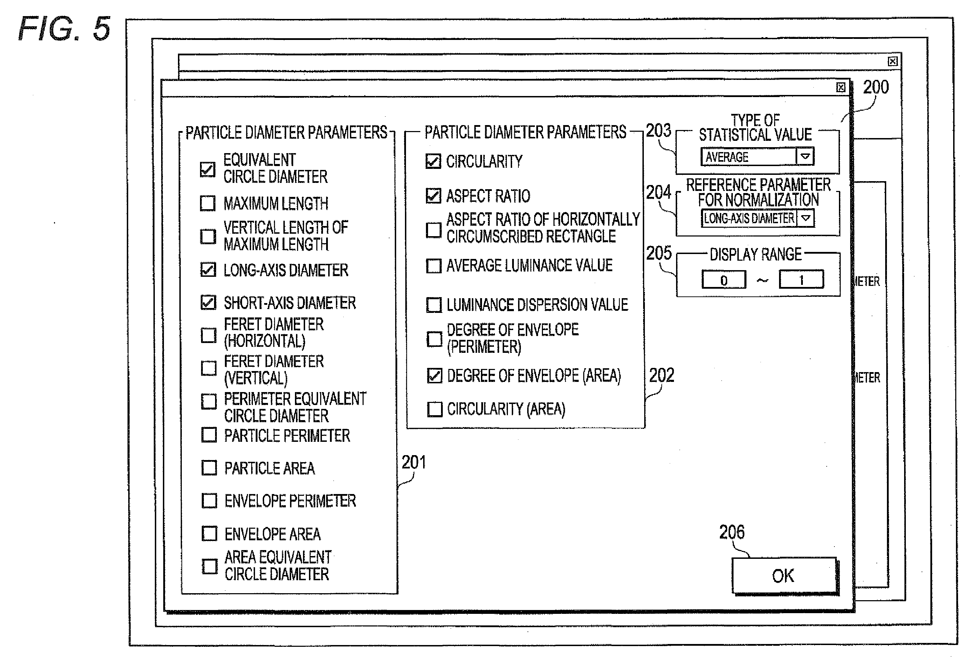

The display parameter setting button 133 is used to set the parameters to be displayed on the parameter value list 131 and the chart 132. When the display parameter setting button 133 is pressed, a display parameter setting screen illustrated in Fig. 5 is displayed.

Referring to Fig. 5, a display parameter setting screen 200 includes setting regions 201 to 205, and an OK button 206.

On the setting region 201, the particle diameter parameters to be displayed on the parameter value list 131 and the chart 132 illustrated in Fig. 4 are selected. When the particle diameter parameters displayed on the setting region 201 are pressed, relevant check boxes are checked as illustrated in the drawing, and it is known that the parameters with the checked boxes are selected. On the setting region 202, the particle shape parameters displayed on the parameter value list 131 and the chart 132 illustrated in Fig. 4 are selected. When the particle shape parameters displayed on the setting region 202 are pressed, relevant check boxes are checked as illustrated in the drawing, and it is known that the parameters with the checked boxes are selected.

On the setting region 203, types of the parameter statistical values displayed on the parameter value list 131 and the chart 132 illustrated in Fig. 4 are selected. The selectable types of the statistical values include the statistical values of parameters illustrated in Fig. 2 (for example, average, SD, and CV).

On the setting region 204, a reference parameter for normalizing the parameter values displayed on the parameter value list 131 and the chart 132 illustrated in Fig. 4 is set. For example, when the long-axis diameter is selected as the reference parameter for normalization as illustrated in the drawing, the other parameter values are set so that the long-axis diameter shows the value of 1. The values thus set are displayed in Fig. 4. The average luminance value is normalized in the range of 0 to 1.0. In the case where the average luminance value is included in a range of specific thresholds previously set, the average luminance value is normalized in the range of 0 - 1.0 depending on the threshold value. The average luminance value exceeding the threshold value is always normalized to "1.0". In the event that the reference parameter for normalization is not set, actually measured values are used as the statistical values.

On the setting region 205, a display range of axes displayed on the chart 132 illustrated in Fig. 4 is set. When the display range is set to 0 - 1 as illustrated in the drawing, for example, the center of the axes expresses 0, and the outermost end thereof expresses 1 as illustrated in Fig. 4.

When the OK button 206 is pressed, the parameters set in the display parameter setting screen 200 are reflected on the screen of the analysis result 2 illustrated in Fig. 4. Then, the parameter value list 131 and the chart 132 illustrated in Fig. 4 are accordingly updated.

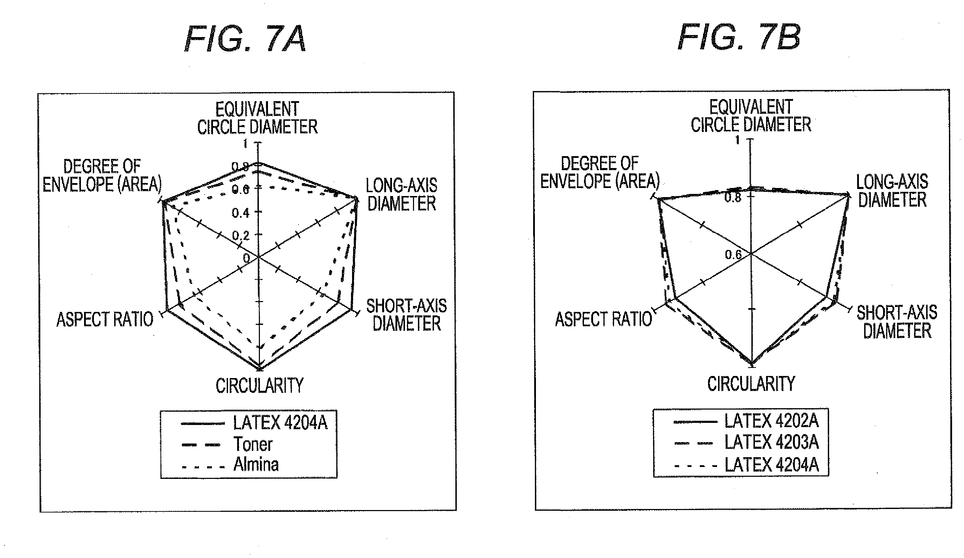

Various examples of the radar chart displayed on the chart 132 of Fig. 4 are illustrated in Figs. 7 to 11.

Figs. 6 illustrates names of specimens of the records referenced when the radar chart is created, and parameter values relevant to the specimen names of the records. Fig. 6A illustrates the parameter values obtained by normalizing average values of actually measured values in different particles, in which the parameter values are normalized based on the long-axis diameter. As described earlier, the average luminance value is normalized in the range of 0 to 1.0. The parameter values of Fig. 6B represent CV (degree of variability). The parameter values of Fig. 6C represent the average values of actually measured values in different particles. To simplify the illustration, the Feret diameter illustrated in Fig. 6C is one of average Feret diameter (horizontal) and average Feret diameter (vertical) larger than the other.

Figs. 7A and 7B are radar charts when three specimens and six parameters are selected from the specimens and the parameters illustrated in Fig. 6A. The six parameters are defaulted. "LATEX" generally called standard sample particles is a specimen containing particles having nearly spherical shapes.

As illustrated in Fig. 7A, the radar charts of "LATEX 4204A", "Tonar", and "Almina" have shapes closer to regular hexagon in the mentioned order. It is known from the illustration that "LATEX 4204A", "Tonar", and "Almina" contain particles having shapes closer to spherical shape in the mentioned order.

As illustrated in Fig. 7B, the radar charts of "LATEX 4203A","LATEX 4204A", and "LATEX 4202A" have shapes closer to regular hexagon in the mentioned order. It is known from the illustration that "LATEX 4203A", "LATEX 4204A", and "LATEX 4202A", contain particles having shapes closer to spherical shape in the mentioned order. The display range of the axes in Fig. 7B is set to 0.6 to 1. The display region is thus set based on display range of the setting region 205 on the display parameter setting screen illustrated in Fig. 5.

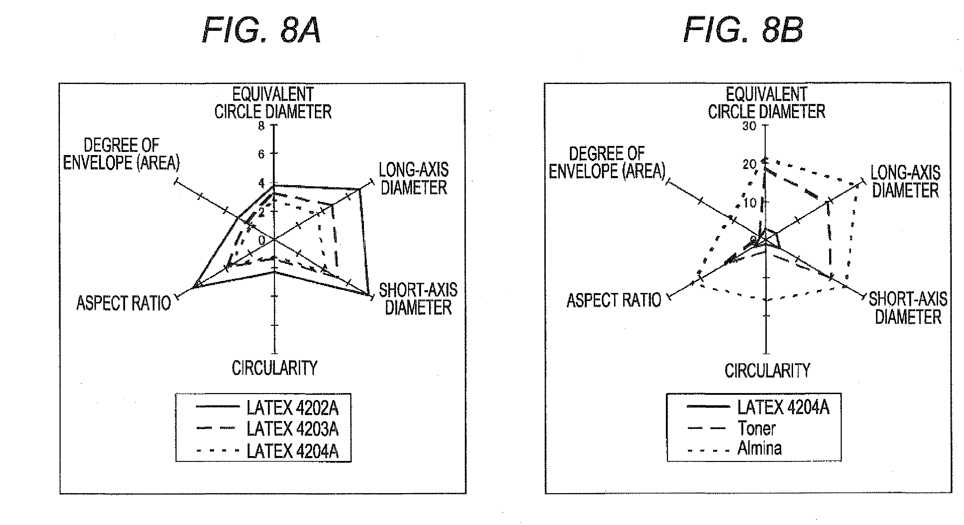

Figs. 8A and 8B are radar charts when three specimens and six parameters are selected from Fig. 6B. The six parameters are defaulted.

According to the radar charts illustrated in Fig. 8A, it is known that "LATEX 4204A","LATEX 4203A", and "LATEX 4202A" have smaller degrees of variability in the mentioned order. According to the radar charts of Fig. 8B, "LATEX 4204A", "Tonar", and "Almina" have smaller degrees of variability in the mentioned order. It is also known that the degree of variability is largely different from one specimen to another.

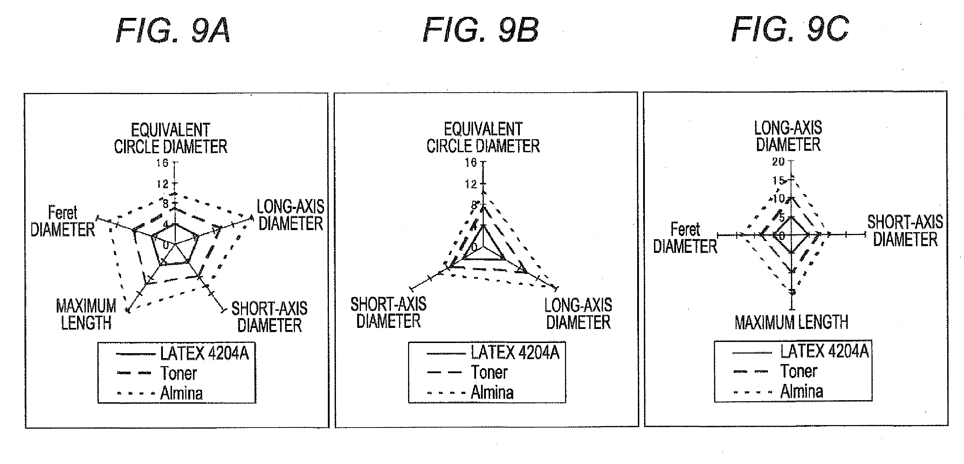

Figs. 9A - 9C are radar charts when three specimens and five, three, and four parameters are selected from Fig. 6C. The default of the parameters is changed using the display parameter setting screen illustrated in Fig. 5. Likewise, it is determined whether or not the radar charts of Figs. 9A to 9C have shapes close to regular pentagon, regular triangle, or square to know whether or not the particles of the specimens are nearly circular. Because the parameter values of these radar charts are the average values of actually measured values, it can be confirmed whether or not the different specimens have different values in a particular parameter.

All of the parameters displayed on the radar charts of Figs. 9A to 9C are the particle diameter parameters. When the particle diameter parameters alone are selected, it is desirable to include three of the particle diameter parameters, equivalent circle diameter, long-axis diameter and short-axis diameter. Referring to these three parameters, an outer shape of the particle, as well as its dimension, can be easily grasped.

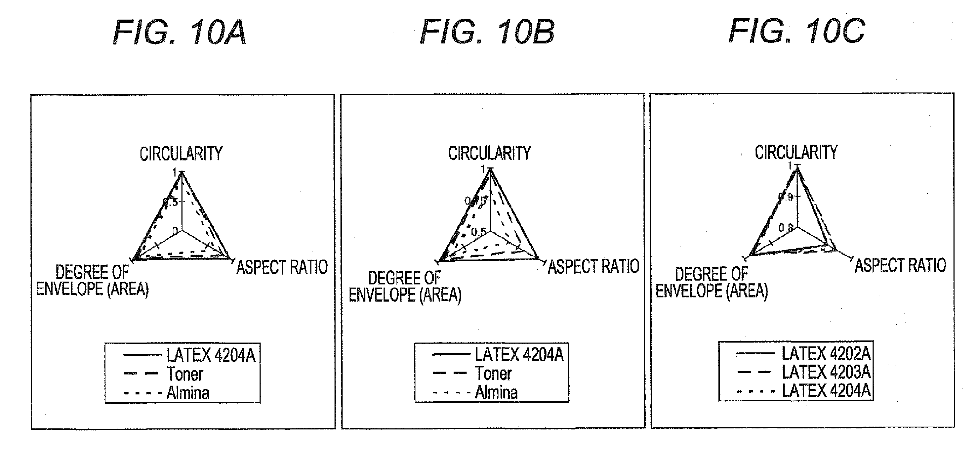

Figs. 10A to 10C are radar charts when three specimens and three parameters are selected from Fig. 6A. The state of the parameters is already changed from their default state using the display parameter setting screen illustrated in Fig. 5. Likewise, it is determined whether or not the radar charts have shapes close to regular triangle to know whether or not the particles of the specimens are nearly circular.

Fig. 10B illustrates the radar chart in which the parameter display range of Fig. 10A is set to 0.5 to 1. Fig. 10B, therefore, makes it easier to grasp the shape of the radar chart rather than Fig. 10A. In Fig. 10C, it is difficult to differentiate the shapes of the radar charts of three specimens, the parameter display range is set to 0.8 to 1. This helps to readily know that the particles of "LATEX 4203A" are more spherical than any other specimens.

All of the parameters displayed on the radar charts of Figs. 10A to 10C are the particle shape parameters. When the particle shape parameters alone are selected, it is desirable to include three of the particle shape parameters, which are circularity, aspect ratio, and degree of envelope. Referring to these three parameters, the particle shape can be accurately grasped.

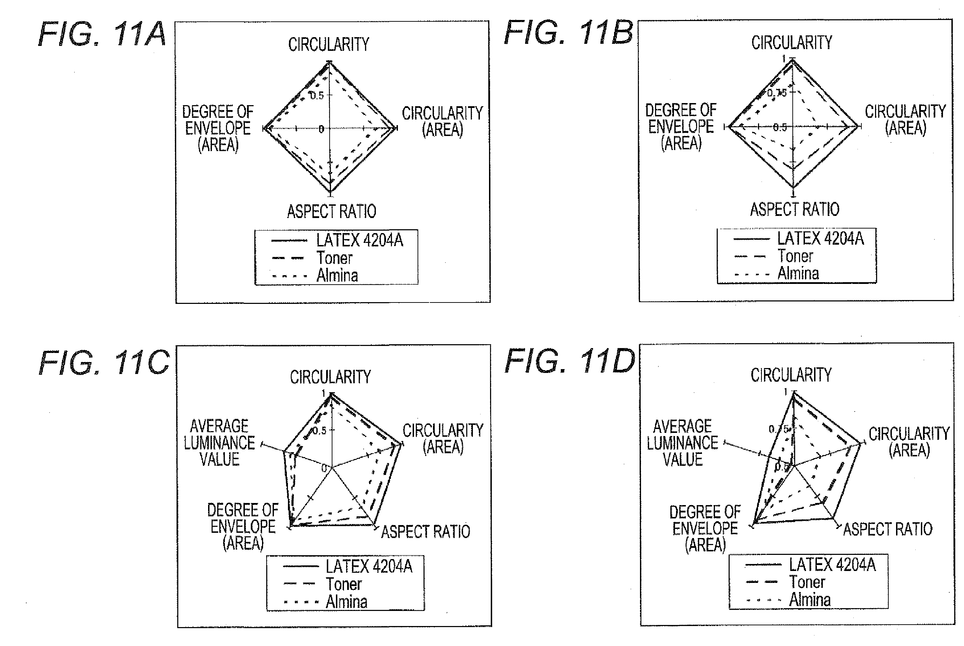

Figs. 11A to 11D are radar charts when three specimens and 4 to 5 parameters are selected from Fig. 6A. The state of the parameters is already changed from their default state using the display parameter setting screen illustrated in Fig. 5. Likewise, it is determined whether or not the radar charts have shapes close to regular pentagon or square to know whether or not the particles of the specimens are nearly spherical.

Fig. 11B illustrates the radar chart in which the parameter display range of Fig. 11A is set to 0.5 to 1. Fig. 11D illustrates the radar chart in which the parameter display range of Fig. 11C is set to 0.5 to 1. Therefore, Fig. 11B makes it easier to grasp the shape of the radar chart rather than Fig. 11A, and Fig. 11D makes it easier to grasp the shape of the radar chart rather than Fig. 11C.

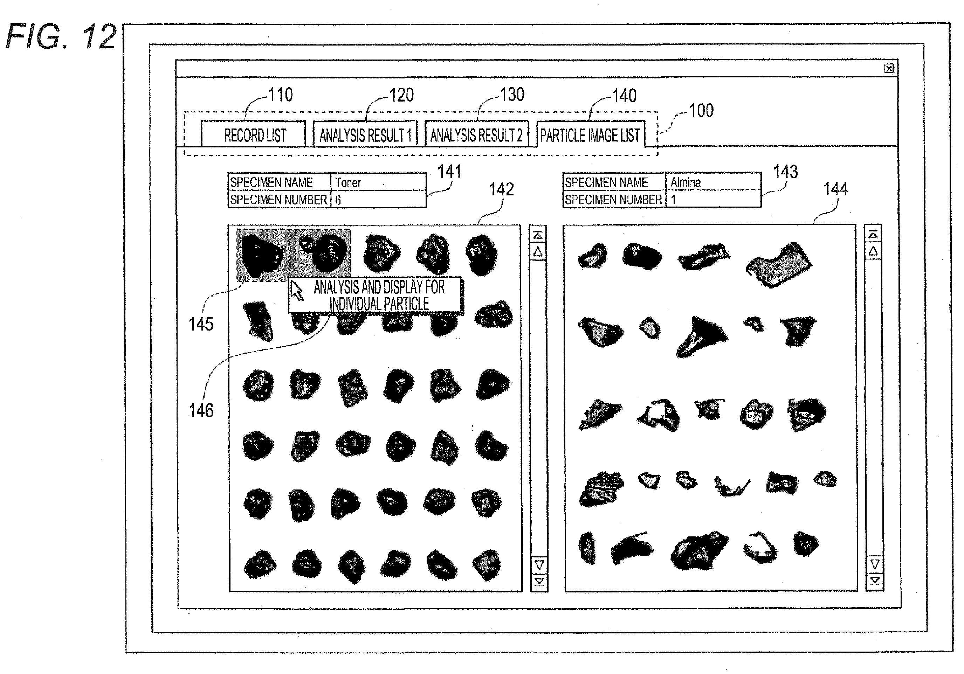

Fig. 12 is an illustration of a screen showing a particle image list displayed on the display unit of the information processing device 2. The illustrated screen is displayed when the particle image list tab 140 is pressed in a state where at least two records are selected on the record list 111 illustrated in Fig. 2.

As illustrated in the drawing, the display unit includes, in addition to a menu 100 similar to that of Fig. 2, record information lists 141 and 143, and particle image lists 142 and 144.

The record information lists 141 and 143 display information of the records selected on the record list 111 illustrated in Fig. 2.

The particle image lists 142 and144 respectively display the images of all of particles measured in the records displayed on the record lists 141 and 143. At the right ends of the particle image lists 142 and 144, scroll bars respectively used to shift their display regions up and down are provided. Accordingly, all of the particle images on the particle image lists 142 and 144 can be viewed.

In the example illustrated in Fig. 12, two records are displayed. When one record is selected on the record list 111 lustrated in Fig. 2, the record contents are displayed on the record information list 141 and the particle image list 142 alone. In the event that at least three records are selected on the record list 111 illustrated in Fig. 2, the record information lists and the particle image lists are suitably arranged on the screen depending on the number of selected records. In such a case, the display regions of the record information lists and the particle image lists that correspondent to the respective records are suitably adjusted on the screen.

When the particle images of the particle image lists 142 and 144 are selected, a particle selection range 145 is set. In response to an operation to display a submenu on the particle selection range 145, a selection display menu 146 is displayed. In the drawing, the particle selection range 145 is set for the particle images continuously displayed, however, can also be set for an arbitrary number of any particle images displayed on the particle image lists 142 and 144.

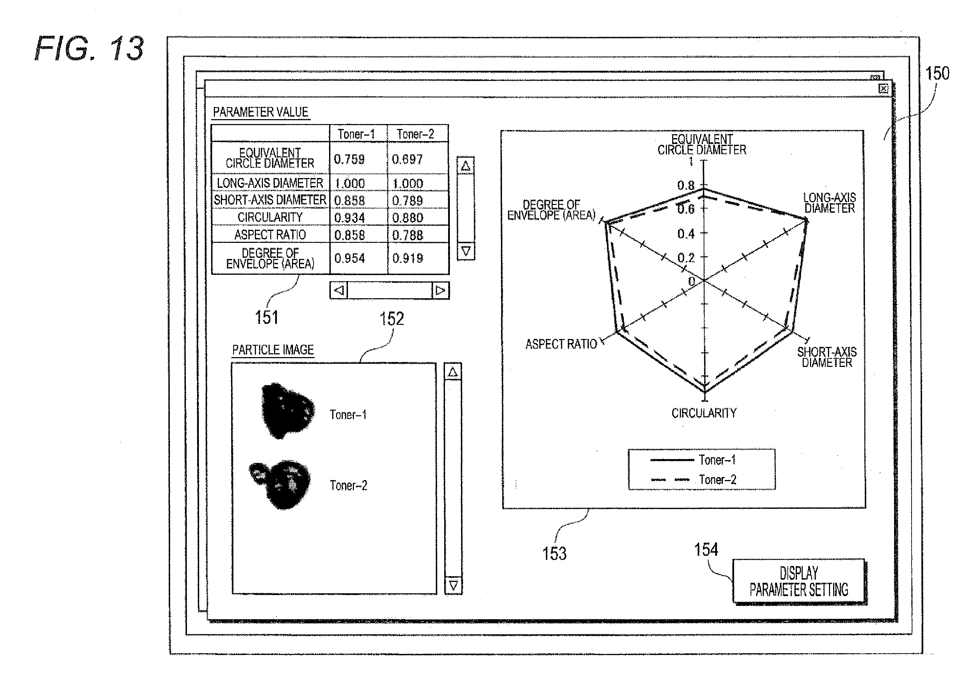

The selection display menu 146 is provided with an "analysis and display for individual particle" window. When the "analysis and display for individual particle" window is pressed, a display screen for individual particle illustrated in Fig. 13 is displayed.

Referring to Fig. 13, a display screen for individual particle 150 includes a parameter value list 151, a particle image list 152, a chart 153, and a display parameter setting button 154.

The parameter value list 151 displays information of particles selected by the particle selection range 145 on the particle image list illustrated in Fig. 12. Items laterally shown displays names of specimens corresponding to the particles selected by the particle selection range 145, and items longitudinally shown displays the parameters of the particles. The six parameters are defaulted. The parameters can be changed by pressing the display parameter setting button 154 and then displaying parameter setting screen, which will be described later.

The particle image list 152 displays the images of the particles displayed on the parameter value list 151. Along with the particle images, particles names are displayed, which are the specimen names with serial numbers appended thereto.

The chart 153 displays a radar chart based on the parameter values displayed on the parameter value list 151. The illustration of Fig. 13 displays a radar chart showing on one screen two particles displayed on the parameter value list 151, and three parameter values relating to particle diameter and three parameter values relating to particle shape based on six parameters of these particles. When the chart 153 is thus displayed, a plurality of parameters of a plurality of particles can be compared at a time.

The display parameter setting button 154 is used to set the parameters to be displayed on the parameter value list 151 and the chart 153. When the display parameter setting button 154 is pressed, a setting screen similar to the display parameter setting screen 200 illustrated in Fig. 5 is displayed. In the display parameter setting screen thus displayed, a region corresponding to the setting region 203 is omitted.

When the parameters are changed on the setting screen, any changes made then are reflected on the display screen for individual particle 150 illustrated in Fig. 13, and the display contents of the parameter value list 151 and the chart 153 illustrated in Fig. 13 are updated.

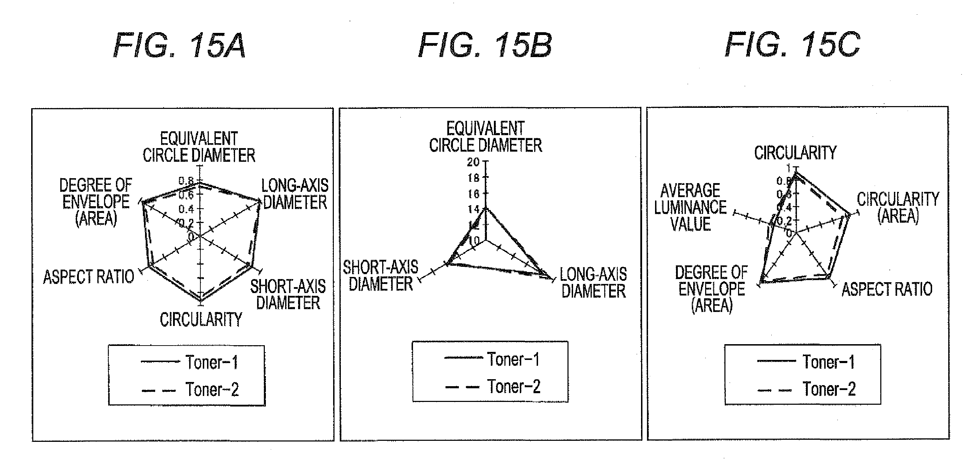

Various examples of the radar chart displayed on the chart 151 of Fig. 13 are illustrated in Figs. 15 to 19.

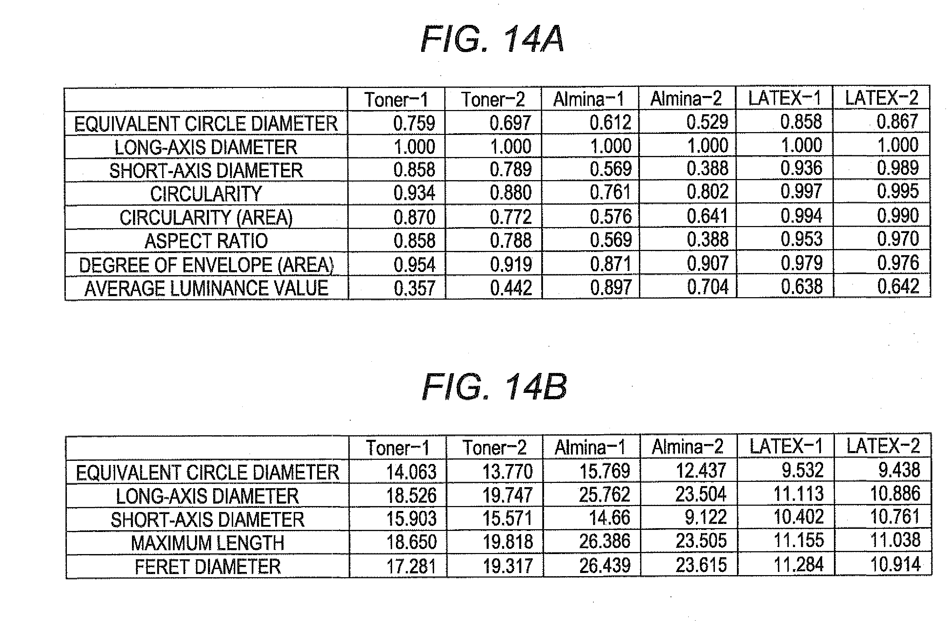

Figs. 14 illustrate names of particles in the records referenced when the radar chart is created, and the parameter values of the particles. Fig. 14A illustrates the parameter values obtained by normalizing actually measured values of different particles, in which the values are normalized based on the long-axis diameter. As described earlier, the average luminance value is normalized in the range of 0 to 1.0. The parameter values illustrated in Fig. 14B represent actually measured values of the respective particles. To simplify the illustration, the Feret diameter illustrated in Fig. 14C is one of Feret diameter (horizontal) and Feret diameter (vertical) larger than the other.

Fig. 15A is a radar chart when two particles of one specimen and six parameters thereof are selected from Fig. 14A. The six parameters are defaulted. By determining whether or not the radar chart of Fig. 15A has a shape close to regular hexagon, it is known whether or not the particle image is nearly circular.

Fig. 15B is a radar chart when two particles of one specimen and three parameters thereof are selected from Fig. 14B. The state of the parameters is already changed from their default state using the display parameter setting screen. Likewise, it is determined whether or not the radar chart of Fig. 15B has a shape close to regular triangle to know whether or not the particle image is nearly circular. The display range of the axes in Fig. 15B is set to 10 to 20.

Fig. 15C is a radar chart when two particles of one specimen and three parameters thereof are selected from Fig. 14A. The state of the parameters is already changed from their default state using the display parameter setting screen. Likewise, it is determined whether or not the radar chart of Fig. 15C has a shape close to regular pentagon to know whether or not the particle image is nearly circular.

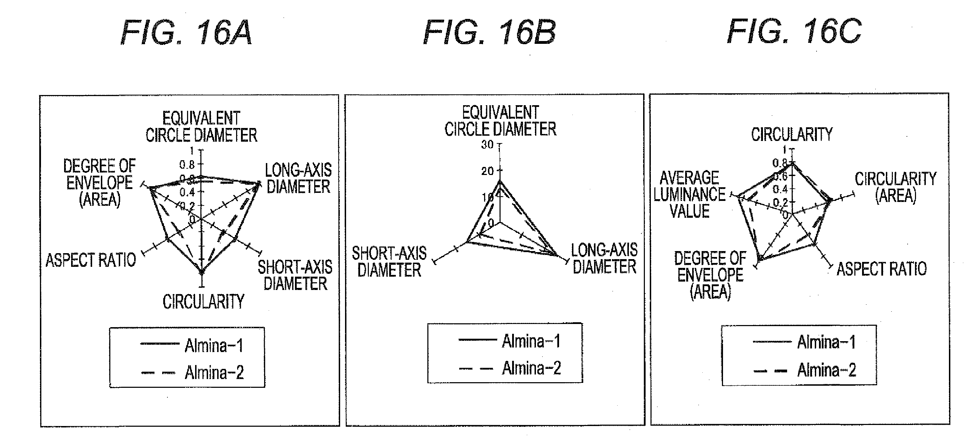

In Figs. 16 and 17, the shapes of the radar charts are determined to know whether or not the particle images are nearly circular in a manner similar to Fig. 15. Figs. 18 and 19 are radar charts when two particles of different specimens are selected. Likewise, the shapes of the radar charts are determined to know whether or not the particle images are nearly circular.

Fig. 20 is a block diagram illustrating the structure of the information processing device 2.

The information processing device 2 is made of a personal computer, and includes a main body 300, an input unit 310, and a display unit 320. The main body 300 has a CPU 301, a ROM 302, a RAM 303, a hard disc 304, a read out device 305, an input/output interface 306, an image output interface 307, and a communication interface 308.

The CPU 301 runs a computer program stored in the ROM 302 and a computer program loaded into the RAM 303. The RAM 303 is used to read out the computer programs recorded on the ROM 302 and the hard disc 304. The RAM 303 is also used as a working region of the CPU 301 when the computer programs are run.

The hard disc 304 is installed with various computer programs to be run by the CPU 301 such as operating system and application program, as well as data used to run the computer programs. More specifically, the hard disc 304 is installed with a program for receiving an image signal outputted from a camera 20, creating an image of each particle based on the received image signal, and analyzing a specimen based on the particle image, and a display program for displaying an analysis result on the display unit 320. By installing these programs, the analyzing process and the display process illustrated in Figs. 2 to 19 are carried out.

The read out device 305 includes a CD drive or a DVD drive. The read out device 305 can read a computer program and data recorded on an external storage such as a recording medium. Therefore, the programs executed by the information processing device 2 can be updated via the external storage, for example, recording medium.

The input unit 310 including a keyboard and a mouse is connected to the input/output interface 306 so that a user can input a command to the information processing device 2 using the input unit 310. The image output interface 307 is connected to the display unit 320 including, for example, a display screen so that a video signal based on image data is displayed on the display unit 320. The display unit 320 displays an image based on the inputted video signal. The image signal outputted from the camera 20 can be inputted through the communication interface 308.

Fig. 21A is a flow chart illustrating steps of the particle imaging process carried out in the information processing device 2.

When the particle image is captured by the camera 20, the image signal outputted from the camera 20 is received by the information processing device 2 through the communication interface 308 (S1). After a predetermined image processing is applied to the received image signals, the resulting image signals are separated from one another by each particle, and the particle image is generated therefrom for individual particle. The generated particle images are stored in the hard disc 304 (S2). Based on the particle images, all of the parameter values relating to particle diameter and particle shape described so far are calculated (S3). The calculated parameters are stored in the hard disc 304 in association with the particle image. Then, statistical values of equivalent circle diameter and circularity (average, SD, CV) are calculated based on the actually measured values of equivalent circle diameter and circularity of each particle, and then stored in the hard disc 304 (S4). Then, the particle imaging process ends.

When the record list screen illustrated in Fig. 2 is thereafter displayed, record information of the specimen most recently measured is added to the list, and the statistical values obtained in S4 (average, SD, CV) are included in the record information.

Fig. 21B is a flow chart illustrating steps of a display process of an analysis result 1.

The process is carried out when the analysis result tab 120 is pressed in a state where one record is selected on the record list 111 of Fig. 2.

First, all of the parameter values relating to particle diameter and particle shape are obtained from the hard disc 304 for the record selected on the record list 111 of Fig. 2 (S11). An initial screen of the analysis result 1 is generated and displayed based on the obtained parameter values (S12). In this description, the record information list 121 of Fig. 3 displays the record information selected on the record list 111 of Fig. 2. Further, the particle diameter histogram 122, particle shape histogram 124, and scattergram 126 are generated based on the parameters (equivalent circle diameter, circularity) defaulted in the particle diameter parameter selection box 123 and the particle shape parameter selection box 125, and then displayed in the corresponding regions of Fig. 3.

When the initial screen of the analysis result 1 is thus displayed, it is determined whether or not the parameters in the particle diameter parameter selection box 123 and the particle shape parameter selection box 125 have been changed (S13). When any of the parameters is changed (S13: YES), the particle diameter histogram 122, particle shape histogram 124, and scattergram 126 are generated based on the changed parameters, and then displayed in the corresponding region of Fig. 3 (S14). The process then returns to S13 to determine again whether or not any of the parameters is changed. When any tab other than the analysis result tab 120 is selected via the menu 100 of Fig. 3 during the determination, the display process of the analysis result 1 ends.

Fig. 22A is a flow chart illustrating steps of a display process of an analysis result 2.

The process is carried out when the analysis result tab 130 is pressed in a state where at least one record is selected on the record list 111 of Fig. 2.

First, all of the parameter values relating to particle diameter and particle shape are obtained from the hard disc 304 for the record selected on the record list 111 of Fig. 2 (S21). An initial screen of the analysis result 1 is generated and displayed based on the obtained parameter values (S22). The parameter values are obtained from the default values of the set parameters of Fig. 5. Then, based on the defaulted parameters and the obtained parameter values, the parameter value list 131 and the chart 132 of Fig. 4 are displayed. An example of the initial screen of the analysis result 1 is illustrated in Fig. 4.

When the initial screen of the analysis result 2 is thus displayed, it is determined whether or not any of the parameters (setting region 201, 202), type of statistical value (setting region 203), reference parameter for normalization (setting region 204), and display range (setting region 205) is changed based on the display parameter setting screen of Fig. 5 (S23). Having determined that any of the parameters, type of statistical value, reference parameter for normalization, and display range is changed (S23: YES), the parameter value list 131 and the chart 132 are reconfigured based on the changed contents, and then displayed on the corresponding region of Fig. 4 (S24). Then, the process returns to S23 to determine again whether or not any of the parameters, type of statistical value, reference parameter for normalization, and display range is changed. When any tab other than the analysis result tab 130 is selected via the menu 100 of Fig. 3 during the determination, the display process of the analysis result 2 ends.

Fig. 22B is a flow chart illustrating steps of an analysis and display process for individual particle.

This process is carried out when an "analysis and display for individual particle" window on the selection display menu 146 based on the particle selection range 145 set on the particle image lists 142 and 144 of Fig. 12 is pressed. When the particle image list screen illustrated in Fig. 12 is displayed, all of the parameter values relating to particle diameter and particle shape for the records to be displayed on the list screen are obtained from the hard disc 304.

First, all of the parameter values relating to the diameters and shapes of particles included in the particle selection range 145 set on the particle image lists 142 and 144 of Fig. 12 are obtained (S31). Based on the obtained parameter values, an initial screen of the "analysis and display for individual particle" is generated and displayed (S32). The parameter values are obtained from the default values of the set parameters of Fig. 5. Then, based on the defaulted parameters and the obtained parameter values, the parameter value list 151 and the chart 153 of Fig. 4 are displayed. An example of the initial screen of the "analysis and display for individual particle" is illustrated in Fig. 13.

When the initial screen of the "analysis and display for individual particle" is thus displayed, the display parameter setting button 154 illustrated in Fig. 13 is pressed to determine whether or not the set parameters have been changed (533). As described earlier, when the display parameter setting button 154 is pressed, the screen in which the setting region 203 is deleted from the display parameter setting screen of Fig. 5 is displayed so that the set parameters can be changed. When the screen is operated to change any of the parameters (setting region 201, 202), reference parameter for normalization (setting region 204) and display range (setting region 205) (S33: YES), the parameter value list 151 and the chart 153 are reconfigured based on the changed contents and displayed on the corresponding regions illustrated in Fig. 13 (S34). Then, the process returns to S33 to determine again whether or not any of the parameters, reference parameter for normalization and display range is changed. When an operation to end the "analysis and display for individual particle" is done during the determination, the display process of the "analysis and display for individual particle" ends.

Processes in Figs. 21 and 22 are carried out by the CPU 301 in accordance with the program installed in the hard disc 304 illustrated in Fig. 20. The analysis and display processes described referring to Figs. 2 to 19 are carried out based on the processes using the program.

According to the present embodiment, the chart 132 of Fig. 4 displays the radar chart where arbitrary particle diameter parameters and arbitrary particle shape parameters of one specimen can be subjected to comparison. Accordingly, characteristics of one specimen can be visually grasped based on a plurality of parameters.

Because the radar charts of a plurality of specimens can be displayed as well, characteristics of the different specimens can be visually compared.

According to the present embodiment, the chart 153 of Fig. 13 displays the radar chart where arbitrary particle diameter parameters and arbitrary particle shape parameters of one particle can be subjected to comparison. Accordingly, characteristics of one particle can be visually grasped based on a plurality of parameters.

Because the radar charts of a plurality of particles can be displayed as well, characteristics of the different particles can be visually compared.

The embodiment of the present invention was described so far. The present invention, however, is not necessarily limited to the embodiment, and the embodiment can be variously modified.

According to the present embodiment, the chart 132 of Fig. 4 and the chart 153 of Fig. 13 display the radar charts. As far as a plurality of parameter values can be compared in a plurality of specimens or particles, any charts other than the radar chart may be displayed.

Figs. 23 illustrate charts which can be used in place of the radar charts.

Figs. 23A and 23B are respectively a polygonal line graph and a bar graph when three specimens and six parameters are selected. When these charts are displayed, a plurality of parameters can be compared in a plurality of specimens in a manner similar to the radar charts. The charts of Figs. 23A and 23B can display a plurality of parameters of a plurality of particles, in which case a plurality of parameters can be similarly compared in a plurality of particles.

According to the present embodiment, the chart 153 displays the radar chart of each particle as illustrated in Figs. 12 and 13. The radar chart of Fig. 13 may be displayed based on a comparison unit in which the particle selection range including a plurality of particles in Fig. 12 is set as the unit.

More specifically, after the particle selection range including a plurality of particles is set in Fig. 12, particles included in the selection range are used as the comparison unit. Then, another comparison unit including different particles is set. Fig. 13 illustrates the radar chart showing statistical values of the parameters of the particles included in the comparison units. Instead of comparing different particles, the units each including a plurality of particles can be used as the basis of comparison. The display parameter setting screen is provided with a region corresponding to the setting region 203 of Fig. 5, in which types of statistical values of the displayed parameters are selectable.

According to the present embodiment, the statistical values of equivalent circle diameter and circularity are calculated during the measuring operation. Instead, the statistical values of these parameters may be calculated during the display of the analysis result 1 of Fig. 3 or the analysis result 2 of Fig. 4, or the statistical values of all of the parameters may be calculated during the measuring operation.

According to the present embodiment, equivalent circle diameter, long-axis diameter, and short-axis diameter are used as the particle diameter parameters, and circularity, aspect ratio, and degree of envelope (area) are used as the particle shape parameters on the initial screen (default) of the analysis result 2 and the initial screen (default) of the "analysis and display for individual particle". On these initial screens, combination of any other parameters may be set, and at least four particle diameter parameters or at least four particle shape parameters may be set. However, the particle diameter parameters preferably include equivalent circle diameter, long-axis diameter, and short-axis diameter, and the particle shape parameters preferably include circularity, aspect ratio, and degree of envelope (perimeter or area).

The selectable parameters are not necessarily limited to the parameters illustrated in Fig. 5, and other parameters may be included as the particle diameter parameters and particle shape parameters.

The embodiment of the present invention can be variously modified within the scope of the technical idea disclosed in the appended claims.

## Claims

1. A particle analyzer, comprising:
a flow cell through which a specimen passes, the specimen including a plurality of particles to be captured;
an imaging device for capturing an image of a particle in the specimen passing through the flow cell;
an image processor for obtaining a first characteristic value of a first parameter, a second characteristic value of a second parameter and a third characteristic value of a third parameter based on the particle image obtained by the imaging device; and
a controller for generating and outputting a screen on which the first, second and third characteristic values are displayed at a time,
wherein
the first, second and third parameters relate to particle diameter; or
the first, second and third parameters relate to particle shape.

2. The particle analyzer of claim 1, wherein the screen includes a radar chart.

3. The particle analyzer of claim 1 or 2, wherein the imaging device captures a plurality of particles to obtain a plurality of particle images, and the image processor obtains the first, second and third characteristic values based on the obtained plurality of particle images.

4. The particle analyzer of claim 3, wherein the image processor obtains the first, second and third characteristic values for each of the plurality of particle images, and calculates average values of the obtained characteristic values of the first, second and third parameters as the first, second and third characteristic values.

5. The particle analyzer of claim 1 or 2, wherein the imaging device captures a plurality of particles to obtain a plurality of particle images, and the image processor obtains the first, second and third characteristic values based on each of the obtained plurality of particle images.

6. The particle analyzer of claim 5, wherein the controller outputs the screen for the particle selected from a list showing the plurality of particles.

7. The particle analyzer of any one of claims 1 to 6, wherein the screen displays the first, second and third characteristic values which are normalized.

8. The particle analyzer of any one of claims 1 to 7, wherein the screen displays the first, second and third characteristic values obtained in a first specimen and the first, second and third characteristic values obtained in a second specimen at a time.

9. The particle analyzer of any one of claims 1 to 8, wherein the controller comprises an input receiving unit for receiving an instruction inputted to set the first, second and third parameters.

10. The particle analyzer of any one of claims 1 to 9, wherein the screen includes a polygonal line graph or a bar graph.

11. The particle analyzer of any one of claims 1 to 10,
wherein the first, second and third parameters relate to particle diameter, and
wherein the first parameter is equivalent circle diameter, the second parameter is long-axis diameter, and the third parameter is short-axis diameter.

12. The particle analyzer of any one of claims 1 to 11, wherein the first, second and third parameters relate to particle diameter, and
wherein the image processor obtains a fourth characteristic value of a fourth parameter relating to particle shape based on the obtained particle images, and the first, second, third and fourth characteristic values are displayed on the screen at a time.

13. The particle analyzer of claim 12, wherein the image processor obtains a fifth characteristic value of a fifth parameter relating to particle shape and a sixth characteristic value of a sixth parameter relating to particle shape based on the obtained particle images, and the first, second, third, fourth, fifth and sixth characteristic values are displayed on the screen at a time.

14. The particle analyzer of claim 13, wherein the fourth parameter is circularity, the fifth parameter is aspect ratio, and the sixth parameter is degree of envelope.

15. The particle analyzer of any one of claims 1 to 10, wherein the first, second and third parameters relate to particle shape, and
wherein the first parameter is circularity, the second parameter is aspect ratio, and the third parameter is degree of envelope.
